# EUROPÄISCHE PATENTSCHRIFT

(11) **EP 1 384 562 B1**
(45) Veröffentlichungstag und Bekanntmachung des Hinweises auf die Patenterteilung: **28.06.2006**
(21) Anmeldenummer: 03016289.5
(22) Anmeldetag: 18.07.2003
(51) Int. Cl.: B29C 45/42, B25J 9/02

(54) **Entnahmeeinrichtung für eine Kunststoff-Spritzgiessmaschine**
PIckup device for an injection moulding machine
Dispositif de démoulage pour une presse à injecter

(30) Priorität: 26.07.2002 DE 10234041
(43) Veröffentlichungstag der Anmeldung: 28.01.2004
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 081 299
- EP-A- 1 008 433
- DD-A- 289 645
- FR-A- 2 123 238
- GB-A- 1 407 157

## Beschreibung

Die Erfindung betrifft eine Entnahmeeinrichtung für eine Kunststoff-Spritzgießmaschine zur Verarbeitung von Kunststoffen und anderen plastifizierbaren Materialien wie pulverigen oder keramischen Massen nach dem Oberbegriff des Anspruches 1.

Eine derartige Entnahmeeinrichtung ist zum Beispiel aus der EP 0 359 013 B1 bekannt. Die dortige Entnahmeeinrichtung befindet sich über der Spritzgießmaschine, so dass ihr Gestell unmittelbar auf der Spritzgießmaschine abgestützt ist. Drei Schlitten bewegen dabei ein Entnahmeelement in zwei horizontalen und einer vertikalen Richtung. Die Ablage der Entnahmeteile erfolgt hinter der Maschine. Ein derartiger Aufbau bereitet jedoch bei größer werdenden Maschinen Probleme insbesondere im Hinblick auf die dafür erforderliche Raumhöhe. Vergleichbare Vorrichtungen mit nur einem Gelenkarm sind aus der EP 0 218 101 A1, DE 36 13 074 A1 oder der DE 23 52 736 B2 bekannt.

Aus der WO 88/03238 A1 ist eine Vorrichtung zum Übersetzen einer Drehbewegung eines exzentrisch um eine Drehachse angeordneten Mitnehmers in eine Linearbewegung eines Schlitten bekannt, bei der mehrere Antriebe überlagert werden und zudem ein Drehantrieb vorgesehen ist. Die Bewegung erfolgt aufwändig in einer Kulissenführung, so dass eine freie Schwenkbarkeit des Schlittens nicht gegeben ist.

Aus der FR 2 123 238 A ist eine Vorrichtung gemäß dem Oberbegriff des Anspruchs 1 bekannt, mit einem zwischen zwei Schlitten angeordneten Schwenkantrieb.

Au der EP 0 081 299 A2, Fig. 3 ist eine Roboterstruktur mit drei relativ zueinander beweglichen Schlitten und vier Antrieben entnehmbar, von denen einer als Drehantrieb für den dritten Schlitten gegenüber dem zweiten Schlitten ausgebildet ist.

Ausgehend von diesem Stand der Technik liegt der vorliegenden Erfindung die Aufgabe zugrunde, eine Entnahmeeinrichtung zu schaffen, die auch bei beengten Raumverhältnissen in Verbindung mit größeren Maschinen eingesetzt werden kann.

Diese Aufgabe wird durch eine Entnahmeeinrichtung mit den Merkmalen des Anspruches 1 gelöst.

Überlagert mit den bereits bekannten Antriebseinheiten für vorzugsweise orthogonal aufeinanderstehende Achsen ist jetzt ein Schwenkantrieb vorgesehen, der dadurch je nach Bedarf die ohnehin vorhandenen Bewegungsrichtungen ergänzt und damit zu einer beschleunigten Bewegung beitragen kann. Durch die Überlagerung der nun vorhandenen vier Antriebe ist ein kurzfristigerer Eingriff in die Spritzgießform möglich, so dass die Zykluszeiten verkürzt werden können. Die so überlagerte Bewegung erlaubt eine deutliche Verringerung der Bauhöhe, so dass eine derartige Entnahmeeinrichtung kaum mehr Raumhöhe benötigt als die Bauhöhe der Maschine selbst. Dennoch kann auf aufwändige Übertragungsmechanismen verzichtet werden. Es ist lediglich der Einsatz einer weiteren Antriebseinheit in Form des Schwenkantriebes erforderlich.

Nach den Ansprüchen 7 und 8 ist der Schwenkantrieb so aufgebaut, dass sich eindeutige Endlagen durch Anschläge ergeben. Die Anschläge tragen sowohl zur genauen Positionierung als auch zu einer Reduzierung des Nachschwingens des Entnahmeelements vor allem bei größeren Entnahmeeinrichtungen bei.

Weitere Vorteile ergeben sich aus den Unteransprüchen.

Im folgenden wird die Erfindung anhand eines in den Figuren dargestellten Ausführungsbeispieles nähre erläutert. Es zeigen:
- Fig. 1: eine dreidimensionale Ansicht einer Formschließeinheit einer Spritzgießmaschine mit daneben angeordneter Entnahmeeinrichtung im Ausgangszustand,
- Fig. 2: eine Darstellung gemäss Fig. 1 mit in die Spritzgießform eingefahrenem Entnahmeelement,
- Fig. 3: eine Darstellung gemäss Fig. 1 mit zurückgezogenem Entnahmeelement sowie - gestrichelt dargestellt - aufgerichtetem Entnahmeelement,
- Fig. 4: eine Darstellung gemäss Fig. 1 mit Entnahmeelement in Ablageposition,
- Fig. 5: eine vergrößerte Darstellung des am zweiten Schlitten angeordneten Schwenkantriebs.

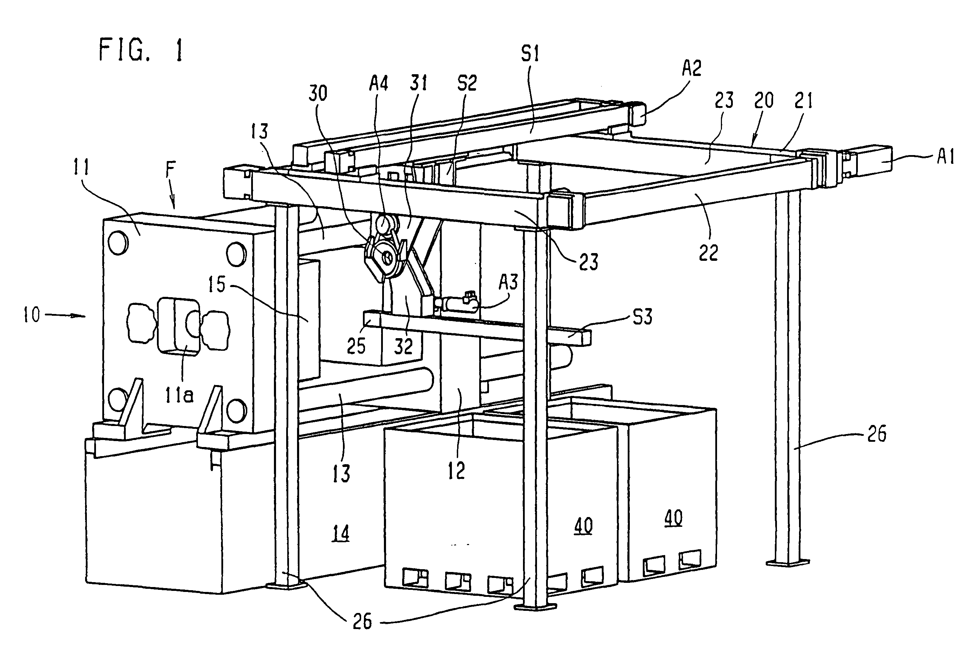

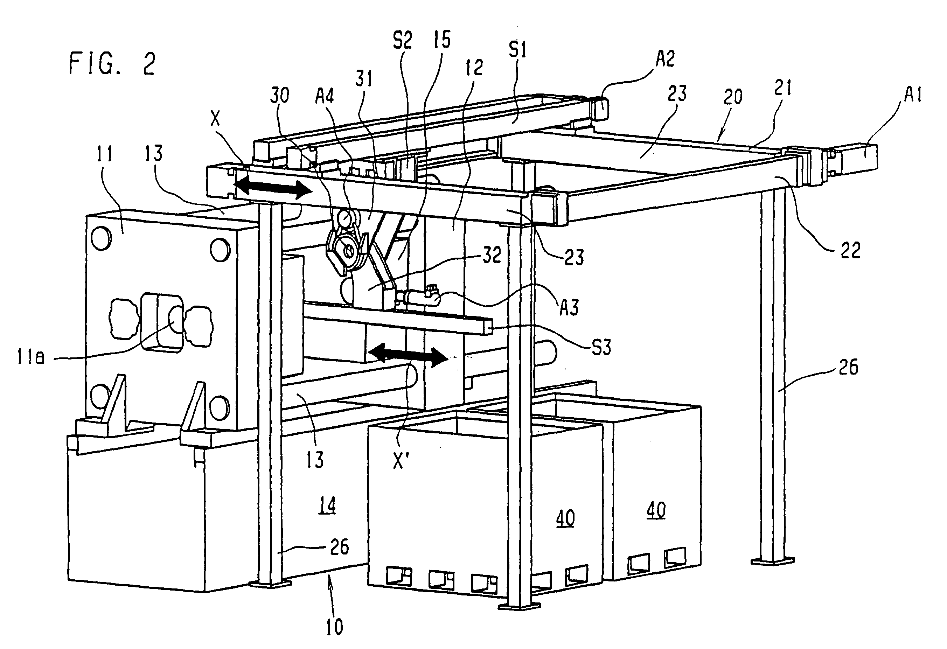

Die Figuren zeigen eine Entnahmeeinrichtung für eine Kunststoff-Spritzgießmaschine zur Entnahme von Spritzgießteilen aus einer geöffneten, in den Fig. 1 und 2 dargestellten Spritzgießform 15. Die Kunststoff-Spritzgießmaschine dient zur Verarbeitung von Kunststoffen und anderen plastifizierbaren Massen wie zum Beispiel pulverigen oder keramischen Massen. Von der Kunststoff-Spritzgießmaschine 10 ist in den Figuren lediglich die Formschließeinheit F angedeutet, die auf einem Maschinenfuß 14 angeordnet ist.

Die Formschließeinheit F besitzt einen stationären Formträger 11 und einen beweglichen Formträger 12, der unter Öffnen und Schließen der Spritzgießform 15 über eine zeichnerisch nicht dargestellte Schließeinheit zyklisch auf den stationären Formträger zu und von diesem weg bewegbar ist. Plastifiziertes Material wird durch eine zeichnerisch nicht dargestellte Spritzgießeinheit durch die Angußöffnung 11a eingespritzt. Der bewegliche Formträger ist entlang von Holmen 13 geführt. Um Spritzteile aus der Spritzgießform 15 zu entnehmen, muss ein Entnahmeelement 25 in die geöffnete Spritzgießform eingefahren werden, wobei dieser Vorgang so schnell wie möglich erfolgen soll, da er die Zykluszeit und damit die Produktivität der Maschine maßgeblich bestimmt. Das Entnahmeelement 25 muss gleichzeitig auch zwischen den Holmen 13 einfahren können, die zur Übertragung der Kräfte, die beim Formschluss und beim Einspritzen entstehen, erforderlich sind. Alternativ kann jedoch auch auf derartige Holme verzichtet werden, wie dies bei holmlosen Maschinen bekannt ist.

Im Ausführungsbeispiel neben der Spritzgießmaschine ist ein Gestell 20 vorgesehen, das auf Beinen 26 Trägerbalken 22, 23 aufweist. An beiden Trägerbalken 23 befinden sich Laufschienen 21, mit denen ein erster Schlitten S1 horizontal beweglich geführt ist. Die Bewegung des Schlittens S1 erfolgt über den Antrieb A1 der stationär am Gestell 20 befestigt ist. Die Bewegung selbst erfolgt über zeichnerisch nicht dargestellte, jedoch an sich bekannt übliche Antriebsmittel wie zum Beispiel Riemenantriebe, Zahnriemen, Antriebsketten, Linearantriebe oder vergleichbare Antriebsmittel. Der Schlitten S1 ist damit in einer ersten Bewegungsrichtung x bewegbar.

An diesem ersten Schlitten S1 ist entlang einer zweiten Bewegungsrichtung y quer zur ersten Bewegungsrichtung x ein zweiter Schlitten S2 horizontal beweglich geführt. Die Bewegung des zweiten Schlittens S2 erfolgt über einen zweiten Antrieb A2. An diesem zweiten Schlitten S2 ist wiederum ein dritter Schlitten S3 in wenigstens einer dritten Bewegungsrichtung z mittels eines dritten Antriebes A3 bewegbar. Der dritte Antrieb A3 ist am zweiten Schlitten angeordnet, genauer gesagt an einem Schwenkarm 32, auf den noch einzugehen ist. Durch die Bewegung des dritten Antriebes A3 wird ein Entnahmeelement 25 in die geöffnete Spritzgießform eingefahren und wieder herausgefahren. Das Entnahmeelement 25 ist in den Zeichnungen lediglich schematisch angedeutet, es handelt sich hierbei jedoch üblicherweise um bekannte Greifer.

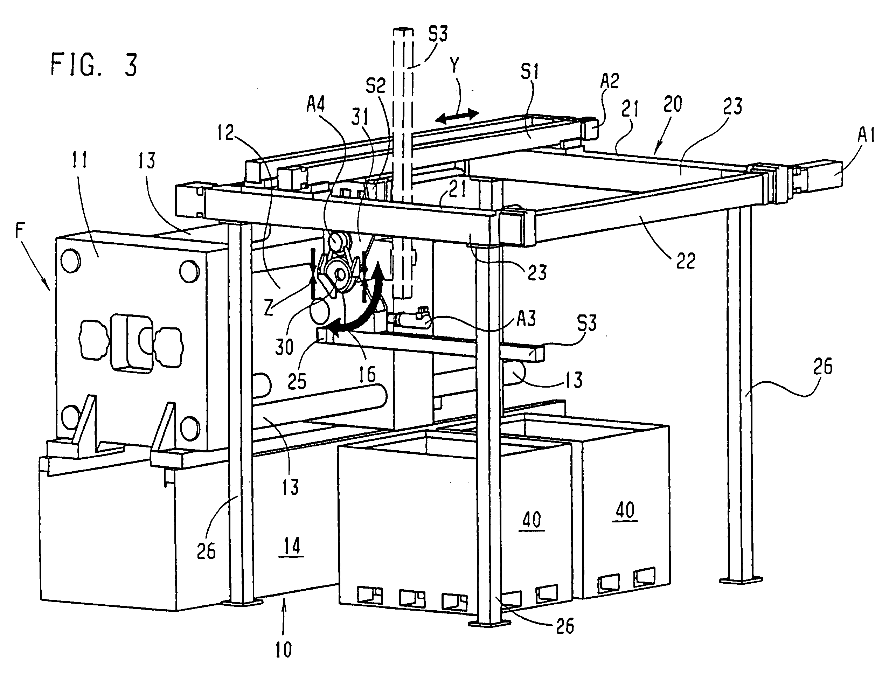

Am zweiten Schlitten S2 ist ein Schwenkantrieb A4 vorgesehen, der zusätzlich zu den eigentlich üblicherweise bereits ausreichenden drei Antrieben eingesetzt wird. Dieser Schwenkantrieb dient zum Verschwenken des dritten Schlittens S3, so dass dieser aus der üblicherweise vorhandenen dritten Bewegungsrichtung z, die nach dem Stand der Technik bisher meist vertikal ist, aber auch horizontal sein kann, in eine durch das Zusammenspiel der Antriebe A1, A2, A3 und des Schwenkantriebs A4 überlagerte vierte Bewegungsrichtung überführbar ist. Das Zusammenspiel der Antriebe ermöglicht damit sowohl die erforderliche Geschwindigkeit als auch den platzsparenden Aufbau der Entnahmeeinrichtung, so dass diese wie auch aus Fig. 3 ersichtlich mit einem verhältnismäßig geringem Raumbedarf auskommt, vor allem was die Raumhöhe anbelangt.

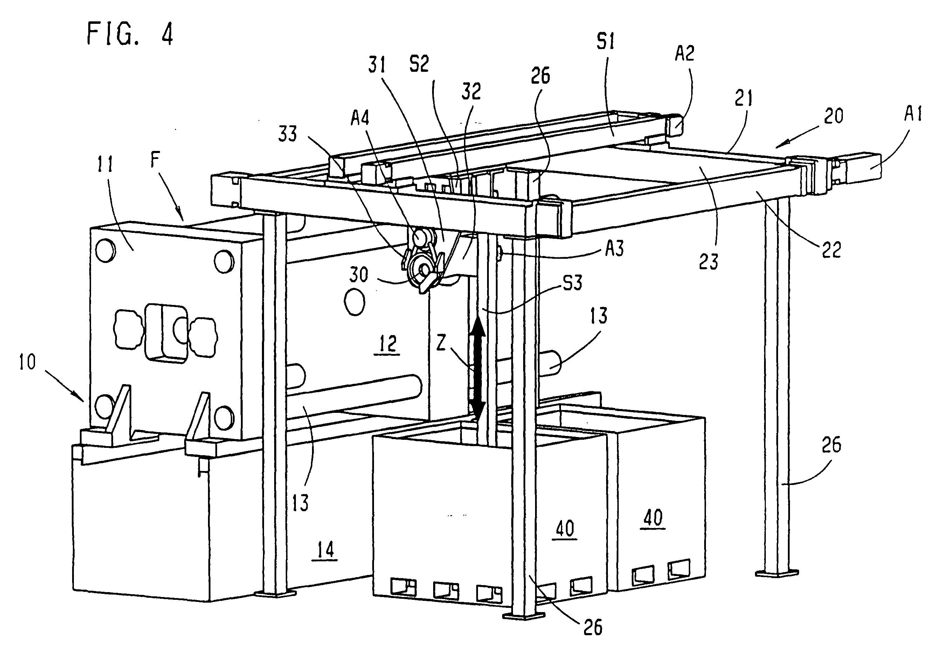

Der Schwenkantrieb ist durch einen Riemenantrieb gebildet. Stattdessen kann der Schwenkantrieb z.B. aber auch unmittelbar an der Schwenk-achse 30 angreifen. Im Ausführungsbeispiel überführt der Schwenkantrieb A4 den dritten Schlitten S3, der hier eine Entnahmestange ist, aus einer Position, in der der dritte Schlitten vertikal bewegbar in der dritten Bewegungsrichtung z zum Beispiel gemäß Figur 4 ist, um die horizontale Schwenkachse 30 in eine Position, in der der dritte Schlitten S3 gemäss Fig. 2 horizontal beweglich ist. Die horizontale Beweglichkeit des dritten Schlittens S3 ist vorzugsweise parallel zur ersten Bewegungsrichtung x, so dass durch ein Zusammenwirken der Antriebe A1 und A3 eine äußerst schnelle horizontale Beweglichkeit in die und aus der Spritzgießform 15 gewährleistet ist. Dies wird in Fig. 2 verdeutlicht durch die die Bewegungsrichtungen anzeigenden Pfeile x und x'. Je nach Ansteuerung können die Antriebe gleichzeitig oder zeitversetzt betrieben werden.

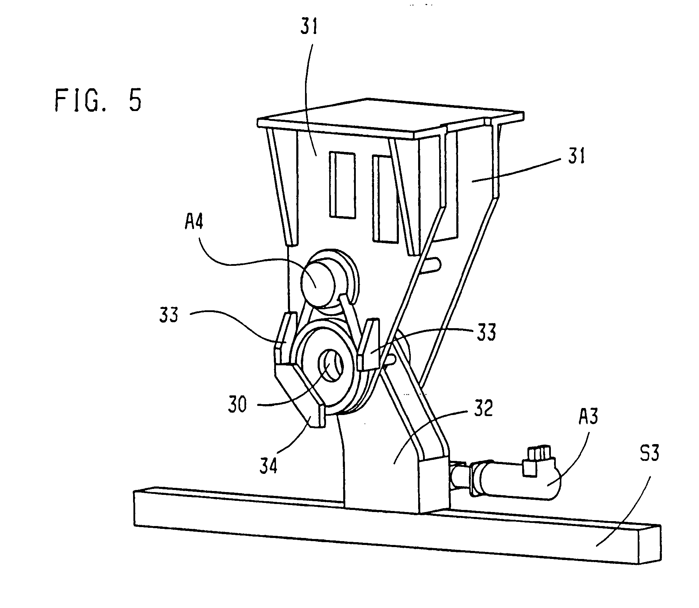

Der Schwenkwinkel des Schwenkantriebes A4 beträgt im Ausführungsbeispiel 90°. Ein am zweiten Schlitten S2 befestigter Arm 31 trägt den Schwenkantrieb A4, was insbesondere Fig. 5 verdeutlicht. Der zweite Schlitten S2 ist über den Arm 31 ungefähr etwa gleich weit von der Schwenkachse 30 beabstandet wie der dritte Schlitten S3 über den Schwenkarm 32. Der dritte Schlitten S3 ist gemäss Fig. 5 am Schwenkarm 32 befestigt, wobei der Antrieb A3 den Schlitten S3 gegenüber dem Schwenkarm 32 verschiebt. Die Bewegung des Schwenkantriebes A4 wird durch am Arm 31 angeordnete Anschläge 33 begrenzt, so dass sich klar definierte Endlagen ergeben. Andererseits weist der Schwenkarm 32 einen trapezförmigen Vorsprung 34 auf, der einen Zentriwinkel von etwa 90° abdeckt. Die beiden Anschläge 33 sind diametral gegenüberliegend auf beiden Seiten der Schwenkachse und somit 180° voneinander entfernt angeordnet. Diese Anordnung führt dazu, dass der Vorsprung 34 wechselweise an den beiden Anschlägen 33 anliegt, was damit zu dem 90° Schwenkwinkel führt. Die Anlage bewirkt, dass der unter Umständen recht lange Schlitten S3 sich verhältnismäßig schnell ausschwingt und damit gezielt zur Entnahme als auch zur Ablageposition verbracht werden kann. Zwar muss der dritte Antrieb A3 mit verschwenkt werden, jedoch erlaubt die Kombination mit dem Schwenkantrieb eine deutliche Raumersparnis.

Im Ausführungsbeispiel ist die erste Bewegungsrichtung x quer zur Mittelachse m der Kunststoff-Spritzgießmaschine 10 oder anders gesagt quer zur Spritzachse. Die zweite Bewegungseinrichtung ist im wesentlichen parallel zu dieser Mittelachse m. Die Entnahmeeinrichtung steht in der Vertikalprojektion im wesentlichen neben der Formschließeinheit F der Kunststoff-Spritzgießmaschine, so dass der dritte Schlitten S3 horizontal bis in die geöffnete Spritzgießform 15 einfahrbar ist.

Die Figuren zeigen den Ablauf bei der Entnahme von Spritzgießteilen. Ausgehend von der Ausgangsposition gemäss Fig. 1 bewegt sich zunächst der dritte Schlitten S3 unter Einsatz der Antriebe A1 und A3 in horizontaler Bewegungsrichtung. Die Geschwindigkeit des Einfahrens und Ausfahrens wird bestimmt durch die Überlagerung der Bewegungen in Bewegungsrichtung x und x'. Ist das Teil aus der geöffneten Form entnommen und sind die Schlitten S1 und S3 zurückgefahren, ergibt sich eine Stellung gemäss Fig. 3, bei der also der Schlitten S3 noch horizontal steht. Falls gewünscht kann jedoch gleichzeitig über den Rotationsantrieb eine Verschwenkung gemäss Pfeil 16 sowie auch unter Mitwirkung des dritten Antriebes A3 eine Verschwenkung in der dritten Bewegungsrichtung z erfolgen, so dass sich zum Beispiel eine der gestrichelten Darstellung des Schlittens S3 entsprechende Darstellung ergibt. Dabei wird deutlich, wie groß der Abstand gegenüber den Ablagebehältem 40 ist, so dass der volle Bewegungsspielraum grundsätzlich nicht ausgenutzt werden muss. Grundsätzlich lassen sich diese Bewegungsabläufe vor allem durch die gleichzeitige Betätigung der Antriebe A1, A2 und des Schwenkantriebs A4 optimieren. Damit wird der bezweckte Betrieb eines Portals mit einem Knickarmantrieb deutlich.

Zum Positionieren kann zusätzlich der zweite Antrieb A2 eingesetzt werden, was zu einer Bewegung in der Bewegungsrichtung y führt. Gemäss Fig. 4 erfolgt die Ablage im Ablagebehälter 40 unter Einsatz des dritten Antriebes A3, der dieses Mal jedoch in vertikaler Richtung wirkt. Deutlich wird dadurch der trotz der gering beanspruchten Raumhöhe mögliche Hub des dritten Schlittens S3 bis zum Boden.

### Bezugszeichenliste

- 10: Kunststoff-Spritzgießmaschine
- 11: stationärer Formträger
- 11a: Angußöffnung
- 12: beweglicher Formträger
- 13: Holm
- 14: Maschinenfuß
- 15: Spritzgießform
- 16: Pfeil
- 20: Gestell
- 21: Laufschiene
- 22, 23: Trägerbalken
- 25: Entnahmeelement
- 26: Beine
- 30: Schwenkachse
- 31: Arm
- 32: Schwenkarm
- 33: Anschlag
- 34: Vorsprung
- 40: Ablagebehälter
- A1: erster Antrieb
- A2: zweiter Antrieb
- A3: dritter Antrieb
- A4: Schwenkantrieb
- S1: erster Schlitten
- S2: zweiter Schlitten
- S3: dritter Schlitten
- x, y, z, x': Bewegungsrichtung
- F: Formschließeinheit

## Patentansprüche

1. Entnahmeeinrichtung für eine Kunststoff-Spritzgießmaschine (10) zur Entnahme von Spritzteilen aus der geöffneten Spritzgießform (15) mit
- einem Gestell (24) mit daran befestigten Laufschienen (21),
- einem an den Laufschienen (21) geführten, horizontal beweglichem ersten Schlitten (S1) und einem ersten Antrieb (A1) zur Bewegung des ersten Schlittens entlang einer ersten Bewegungsrichtung (x),
- einem am ersten Schlitten (S1) entlang einer zweiten Bewegungsrichtung (y) quer zur ersten Bewegungsrichtung (x) geführten, horizontal beweglichen zweiten Schlitten (S2) und einem zweiten Antrieb (A2) zur Bewegung des zweiten Schlittens (S2),
- einem am zweiten Schlitten (S2) zumindest in wenigstens einer dritten Bewegungsrichtung (z) mittels eines dritten Antriebs (A3) bewegbaren dritten Schlitten (S3) mit einem in die geöffnete Spritzgießform (15) einfahrbaren Entnahmeelement (25),
**dadurch gekennzeichnet, dass** am zweiten Schlitten (S2) ein zusätzlicher Schwenkantrieb (A4) zum Schwenken des dritten Schlittens (S3) aus der dritten Bewegungsrichtung in eine horizontale Bewegungsrichtung vorgesehen ist.

2. Entnahmeeinrichtung nach Anspruch 1, **dadurch gekennzeichnet, dass** der dritte Schlitten (S3) durch den Schwenkantrieb (A4) aus der dritten Bewegungsrichtung (z) in eine durch das Zusammenspiel der Antriebe (A1,A2,A3) und des Schwenkantriebs (A4) überlagerte vierte Bewegungsrichtung verschwenkbar ist.

3. Entnahmeeinrichtung nach Anspruch 1 oder 2, **dadurch gekennzeichnet, dass** der dritte Schlitten (S3) mittels des Schwenkantriebs (A4) aus einer Position, in der der dritte Schlitten (S3) vertikal in der dritten Bewegungsrichtung (z) bewegbar ist um eine horizontale Schwenkachse (30) in eine Position überführbar ist, in der der dritte Schlitten (S3) horizontal bewegbar ist.

4. Entnahmeeinrichtung nach einem der vorhergehenden Ansprüche, **dadurch gekennzeichnet, dass** die horizontale Beweglichkeit des dritten Schlittens (S3) parallel zur ersten Bewegungsrichtung (x) ist.

5. Entnahmeeinrichtung nach einem der vorhergehenden Ansprüche, **dadurch gekennzeichnet, dass** zur Entnahme von Spritzteilen der erste Antrieb (A1) und der dritte Antrieb (A3) gleichzeitig betätigbar sind.

6. Entnahmeeinrichtung nach einem der vorhergehenden Ansprüche, **dadurch gekennzeichnet, dass** der Schwenkwinkel des Schwenkantriebes (A4) 90° beträgt.

7. Entnahmeeinrichtung nach einem der vorhergehenden Ansprüche, **dadurch gekennzeichnet, dass** ein am zweiten Schlitten (S2) befestigter Arm (31) den Schwenkantrieb (A4) trägt, wobei der zweite Schlitten (S2) über einen Arm (31) und der dritte Schlitten (S3) über einen Schwenkarm (32) gleichweit von der Schwenkachse (30) beabstandet sind.

8. Entnahmeeinrichtung nach einem der vorhergehenden Ansprüche, **dadurch gekennzeichnet, dass** der dritte Schlitten (S3) an einem Schwenkarm (32) gehalten ist, der durch Anschläge (33) in seiner jeweiligen Endlage abgestützt ist.

9. Entnahmeeinrichtung nach Anspruch 8, **dadurch gekennzeichnet, dass** die Anschläge (33) beiderseits der Schwenkachse (30) am Arm (31) so angeordnet sind, dass sie an den beiden Enden eines Vorsprungs (34) des Schwenkarms (32) wechselweise zur Anlage kommen.

10. Entnahmeeinrichtung nach einem der vorhergehenden Ansprüche, **dadurch gekennzeichnet, dass** der dritte Antrieb (A3) für den dritten Schlitten (S3) am Schwenkarm (32) angeordnet ist.

11. Entnahmeeinrichtung nach einem der vorhergehenden Ansprüche, **dadurch gekennzeichnet, dass** die erste Bewegungsrichtung (x) quer zur Mittellinie (m) der Kunststoff-Spritzgießmaschine (10) und die zweite Bewegungsrichtung (y) parallel zur Mittellinie (m) ist.

12. Entnahmeeinrichtung nach einem der vorhergehenden Ansprüche, **dadurch gekennzeichnet, dass** die Entnahmeeinrichtung in der Vertikalprojektion neben der Formschließeinheit (F) der Spritzgießmaschine (10) angeordnet ist.

13. Entnahmeeinrichtung nach einem der vorhergehenden Ansprüche, **dadurch gekennzeichnet, dass** der dritte Schlitten (S3) horizontal bis in die geöffnete Spritzgießform (15) einfahrbar ist.

## Claims

1. Removal mechanism for a plastic material injection moulding machine (10) for removing injection moulding parts from the opened injection mould (15), comprising
- a frame (24) with rails (21) mounted thereon,
- a horizontally moveable first sliding carriage (S1), which is guided on the rails (21), and a first drive (A1) for moving the first sliding carriage along a first direction of motion (x),
- a horizontally moveable second sliding carriage (S2), which is guided on the first sliding carriage (S1) along a second direction of motion (y) transversely relative to the first direction of motion (x), and a second drive (A2) for moving the second sliding carriage (S2),
- a third sliding carriage (S3) which is movable on the second sliding carriage (S2) at least in at least a third direction of motion (z) by means of a third drive (A3), the third sliding carriage comprising a removal element (25) which can be inserted into the opened injection mould (15),
**characterised in that** an additional swivel drive (A4) is provided on the second sliding carriage (S2) for swivelling the third sliding carriage (S3) from the third direction of motion into a horizontal direction of motion.

2. Removal mechanism according to claim 1, **characterised in that** the third sliding carriage (S3) can be swivelled by the swivel drive (A4) from the third direction of motion (z) into a fourth direction of motion which is superimposed by the cooperation of the drives (A1, A2, A3) and of the swivel drive (A4).

3. Removal mechanism according to claim 1 or 2, **characterised in that** the third sliding carriage (S3) is transferable via the swivel drive (A4) from a position, in which the third sliding carriage (S3) is moveable vertically in the third direction of motion (z), about a horizontal swivel axis (30) into a position in which the third sliding carriage (S3) is substantially horizontally movable.

4. Removal mechanism according to one of the preceding claims, **characterised in that** the horizontal moveability of the third sliding carriage (S3) is parallel to the first direction of motion (x).

5. Removal mechanism according to one of the preceding claims, **characterised in that**, in order to remove injection moulded parts, the first drive (A1) and the third drive (A3) are simultaneously actuatable.

6. Removal mechanism according to one of the preceding claims, **characterised in that** the swivel angle of the swivel drive (A4) is 90°.

7. Removal mechanism according to one of the preceding claims, **characterised in that** an arm (31) mounted on the second sliding carriage (S2) carries the swivel drive (A4), the second sliding carriage (S2) being spaced via an arm (31) and the third sliding carriage (S3) being spaced via a swivel arm (32) equally far from the swivel axis (30).

8. Removal mechanism according to one of the preceding claims, **characterised in that** the third sliding carriage (S3) is retained on a swivel arm (32) which is supported in its respective final position by stop members (33).

9. Removal mechanism according to claim 8, **characterised in that** the stop members (33) are disposed on both sides of the swivel axis (30) on the arm (31) such that the stop members come alternately into contact with the two ends of a projection (34) of the swivel arm (32).

10. Removal mechanism according to one of the preceding claims, **characterised in that** the third drive (A3) for the third sliding carriage (S3) is disposed on the swivel arm (32).

11. Removal mechanism according to one of the preceding claims, **characterised in that** the first direction of motion (x) is transverse relative to the central line (m) of the plastic material injection moulding machine (10) and the second direction of motion (y) is parallel to the central line (m).

12. Removal mechanism according to one of the preceding claims, **characterised in that** the removal mechanism is disposed in the vertical projection adjacent to the mould closing unit (F) of the injection moulding machine (10).

13. Removal mechanism according to one of the preceding claims, **characterised in that** the third sliding carriage (S3) is insertable horizontally right into the opened injection mould (15).

## Revendications

1. Dispositif de démoulage pour une machine de moulage par injection (10) pour démouler du moule de moulage par injection (15) ouvert des pièces moulées par injection, comprenant
- un châssis (24) auquel sont fixés des glissières (21),
- un premier chariot (S1) mobile horizontalement, guidé sur les glissières (21), et un premier entraînement (A1) pour déplacer le premier chariot le long d'une première direction de déplacement (x),
- un deuxième chariot (S2) mobile horizontalement, guidé sur le premier chariot (S1) le long d'une deuxième direction de déplacement (y) transversalement par rapport à la première direction de déplacement (x), et un deuxième entraînement (A2) pour déplacer le deuxième chariot (S2),
- un troisième chariot (S3), mobile sur le deuxième chariot (S2) au moins dans une troisième direction de déplacement (z) au moyen d'un troisième entraînement (A3), avec un élément de démoulage (25) pouvant rentrer dans le moule de moulage par injection (15) ouvert,
**caractérisé en ce qu'**est prévu, sur le deuxième chariot (S2), un entraînement pivotant (A4) pour faire pivoter le troisième chariot (S3) pour le faire passer de la troisième direction de déplacement dans une direction de déplacement horizontale.

2. Dispositif de démoulage selon la revendication 1, **caractérisé en ce que** le troisième chariot (S3) peut, du fait de l'entraînement pivotant (A4), subir un pivotement le faisant passer de la troisième direction de déplacement (z) à une quatrième direction de déplacement superposée du fait de la coopération des entraînements (A1, A2, A3) et de l'entraînement pivotant (A4).

3. Dispositif de démoulage selon la revendication 1 ou 2, **caractérisé en ce que** le troisième chariot (S3) peut, au moyen de l'entraînement pivotant (A4), être amené, en se déplaçant autour d'un axe de pivotement horizontal (30), d'une position dans laquelle le troisième chariot (S3) est mobile verticalement dans la troisième direction de déplacement (z) dans une position dans laquelle le troisième chariot (S3) est mobile horizontalement.

4. Dispositif de démoulage selon l'une des revendications précédentes, **caractérisé en ce que** la mobilité horizontale du troisième chariot (S3) est parallèle à la première direction de déplacement (x).

5. Dispositif de démoulage selon l'une des revendications précédentes, **caractérisé en ce que**, pour démouler des pièces moulées par injection, le premier entraînement (A1) et le troisième entraînement (A3) sont actionnables simultanément.

6. Dispositif de démoulage selon l'une des revendications précédentes, **caractérisé en ce que** l'angle de pivotement de l'entraînement pivotant (A4) est de 90°.

7. Dispositif de démoulage selon l'une des revendications précédentes, **caractérisé en ce qu'**un bras (31) fixé au deuxième chariot (S2) porte l'entraînement pivotant (A4), le deuxième chariot (S2), par l'intermédiaire d'un bras (31), et le troisième chariot (S3), par l'intermédiaire d'un bras pivotant (32), étant situés à une même distance de l'axe de pivotement (30).

8. Dispositif de démoulage selon l'une des revendications précédentes, **caractérisé en ce que** le troisième chariot (S3) est retenu sur un bras pivotant (32) qui est supporté par des butées (33) dans sa position finale respective.

9. Dispositif de démoulage selon la revendication 8, **caractérisé en ce que** les butées (33) sont situées de part et d'autre de l'axe de pivotement (30) sur le bras (31) de manière telle qu'elles viennent s'appliquer en alternance sur les deux extrémités d'une saillie (34) du bras pivotant (32).

10. Dispositif de démoulage selon l'une des revendications précédentes, **caractérisé en ce que** le troisième entraînement (A3) pour le troisième chariot (S3) est situé sur le bras pivotant (32).

11. Dispositif de démoulage selon l'une des revendications précédentes, **caractérisé en ce que** la première direction de déplacement (x) est transversale par rapport à la ligne médiane (m) de la machine de moulage par injection (10) et la deuxième direction de déplacement (y), parallèle à la ligne médiane (m).

12. Dispositif de démoulage selon l'une des revendications précédentes, **caractérisé en ce que** le dispositif de démoulage, en projection verticale, est situé à côté de l'unité de fermeture de moule (F) de la machine de moulage par injection (10).

13. Dispositif de démoulage selon l'une des revendications précédentes, **caractérisé en ce que** le troisième chariot (S3) peut être rentré horizontalement jusque dans le moule de moulage par injection (15) ouvert.
